# NOUVEAU FASCICULE DE BREVET EUROPEEN

(11) **EP 1 916 152 B2**
(45) Date de publication et mention de la décision concernant l'opposition: **25.11.2020**
(45) Mention de la délivrance du brevet: 09.12.2015
(21) Numéro de dépôt: 07291263.7
(22) Date de dépôt: 16.10.2007
(51) Int. Cl.: B60Q 1/04, B62D 25/08

(54) **Bloc avant de véhicule et véhicule automobile associé**
Vorderstruktur eines Kraftfahrzeugs und damit ausgestattetes Kraftfahrzeug
Front-end structure of a vehicle and associated automobile

(30) Priorité: 23.10.2006 FR 0609282
(43) Date de publication de la demande: 30.04.2008
(73) Titulaire: Flex-N-Gate France, 25405 Audincourt (FR)
(72) Inventeur: Bierjon, Didier, 25400 Audincourt (FR)
(74) Mandataire: Lavoix

(56) Documents cités:
- EP-A- 1 623 873
- EP-A- 1 702 834
- WO-A-2004/085230
- WO-A-2007/140892
- DE-B3- 10 237 454
- JP-A- 3 284 481

## Description

La présente invention concerne un bloc avant de véhicule automobile, selon le préambule de la revendication 1.

WO 2007/140892 fait partie de l'état de la technique uniquement au titre de l'Article 54 (3) CBE 2000. Il décrit une structure avant de véhicule dans laquelle un organe structurel portant un radiateur est placé à l'avant des platines avant de longerons.

JP 03-284481 et WO 2004/085230 décrivent des blocs avant de véhicule automobile qui comprennent une fixation rigide des blocs optiques sur la caisse du véhicule automobile.

EP 1 702 834 selon le préambule et EP 1 623 873 décrivent des bras souples de support de bloc optique fixés sur la caisse du véhicule automobile.

Les blocs avant de véhicules automobiles comportent généralement une face avant qui présente une partie centrale et deux parties latérales, un pare-chocs, et une peau de pare-chocs formant carénage de ce pare-chocs. Les blocs avant comprennent en outre deux bras s'étendant chacun de la partie centrale vers une partie latérale respective, et formant des organes de support de ladite peau dé pare-chocs, et deux blocs optiques. Chaque bloc optique est supporté par une partie latérale respective et présente une partie périphérique latérale adaptée pour coopérer avec un évidement complémentaire d'une partie avant d'aile respective.

Une difficulté majeure rencontrée par les constructeurs automobiles consiste à positionner de façon précise les blocs optiques par rapport aux éléments d'aspect constitués par les ailes et la peau de pare-chocs. Cet ajustage est important du fait qu'un défaut de continuité de surface de la partie visible du bloc optique, c'est à dire de la glace, de l'aile correspondante, et de la peau de pare-chocs dégrade sensiblement la qualité esthétique du véhicule. En outre, un réglage précis de la position du bloc optique par rapport à l'aile et à la peau de pare-chocs est difficile à maintenir entre l'opération de montage des blocs optiques sur la face avant et l'opération d'assemblage du bloc avant équipé sur la caisse du véhicule automobile.

Ces difficultés ont été accrues par la généralisation des blocs optiques monoblocs intégrant la fonction clignotant, alors qu'auparavant la partie formant le clignotant était ajustable par rapport à la partie principale du bloc optique, de sorte qu'il était relativement aisé de compenser des tolérances de positionnement.

Dans le cas d'optiques monoblocs intégrant la fonction de clignotant, chaque bloc optique est généralement fixé en quatre points sur la face avant qui constitue une pièce rigide.

Après assemblage de chaque bloc optique, on les monte sur la caisse du véhicule et on fixe sur chacun de ces blocs optiques l'extrémité avant de l'aile de carrosserie correspondante.

Dans une opération suivante, le constructeur automobile réalise le réglage de la position du bloc optique par rapport à l'aile, en agissant sur deux points de fixation du bloc optique sur la face avant.

L'inconvénient majeur de ce mode opératoire réside surtout dans cette opération de reprise en fin de montage, qui consiste à régler la position du bloc optique. En outre, ce réglage délicat doit être effectué pour tous les véhicules compte tenu des tolérances de fabrication et d'assemblage des différents éléments mis en jeu. Ces éléments étant également susceptibles de déformations plus ou moins importantes, les affleurements de surface obtenus par ces réglages ne sont pas stables dans le temps et peuvent nécessiter des réglages supplémentaires.

A cet effet, on connaît dans le document EP-A-1 232 932 un bloc avant de véhicule automobile comprenant une face avant, qui présente une partie centrale et deux parties latérales, une peau de pare-chocs, deux bras flexibles s'étendant latéralement et formant des supports de la peau de pare-chocs, dont chacune a une première extrémité reliée à la partie centrale et une seconde extrémité destinée à être reliée à une partie avant d'aile de carrosserie du véhicule, et deux blocs optiques, dont chacun est fixé rigidement à un bras respectif.

La structure décrite dans ce document permet un positionnement automatique et permanent des contours visibles des blocs optiques par rapport aux extrémités d'ailes correspondantes et à la peau de pare-chocs.

Les bras flexibles améliorent l'aspect esthétique du véhicule en corrigeant les jeux entre le bloc optique, la peau de pare-chocs et chaque panneau d'aile. Toutefois, dans cette structure, chaque bras est fixé sur une surface avant de la face avant, ce qui est adapté à des géométries de carrosserie dans lesquelles le bloc optique est proche de la face avant.

Un but de l'invention est donc d'obtenir des blocs avant de véhicules automobiles présentant des géométries de carrosserie différentes, notamment pour des carrosseries fortement bombées vers l'avant et vers les côtés, tout en conservant un aspect esthétique satisfaisant entre le bloc optique, la peau de pare-chocs et les ailes.

A cet effet, l'invention a pour objet un bloc avant selon la revendication 1.

Le bloc avant selon l'invention peut comprendre l'une ou plusieurs de caractéristiques des revendications 2 à 4 prise(s) isolément ou suivant toutes combinaisons techniquement possibles, entre autre où l'organe transversal de structure est une face avant transversale comprenant une traverse transversale et un cadre solidaire de la traverse, et s'étendant sous la traverse.

L'invention a en outre pour objet un véhicule automobile selon la revendication 5.

L'invention sera mieux comprise à la lecture de la description qui va suivre, donnée uniquement à titre d'exemple, et faite en se référant aux dessins annexés, sur lesquels :
- la Figure 1 est une vue schématique partielle en perspective de trois-quarts face d'un premier bloc avant selon l'invention ;
- la Figure 2 est une vue analogue à la Figure 1 d'un deuxième bloc avant selon l'invention et ;
- la Figure 3 est une vue analogue à la Figure 1 d'un troisième bloc avant ne faisant pas partie de l'invention.

Dans tout ce qui suit, les orientations sont les orientations habituelles d'un véhicule automobile. Ainsi, les termes « avant », « arrière », « supérieur », « inférieur », « extérieur », « intérieur », « gauche », « droite », s'entendent par rapport au sens normal de circulation d'un véhicule automobile et à la position d'un conducteur.

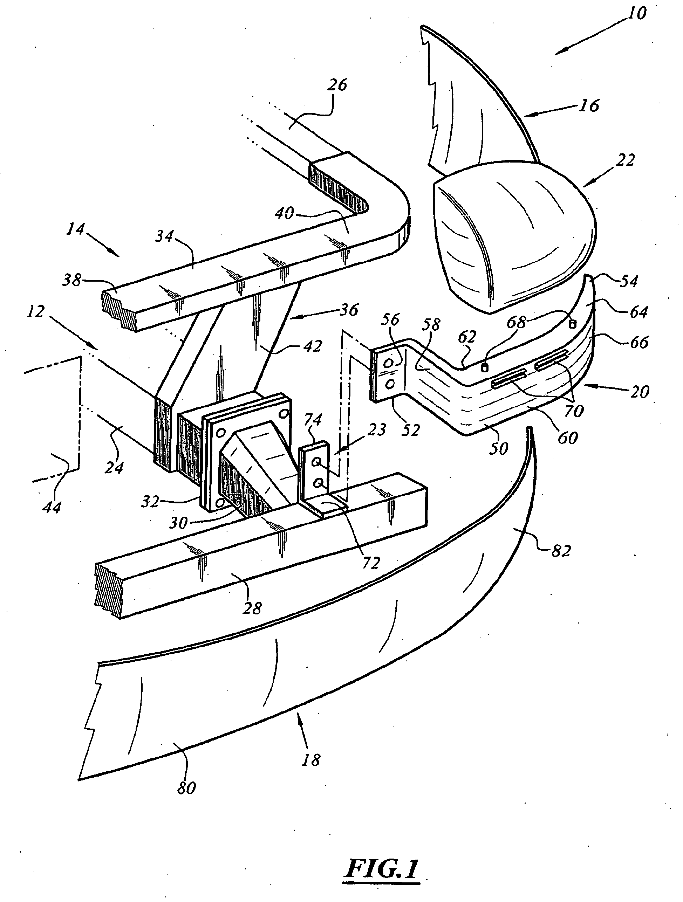

Un premier bloc avant 10 selon l'invention est représenté partiellement sur la Figure 1. Ce bloc avant 10 comprend des éléments structurels rigides 12 de caisse, et une face avant 14 structurelle transversale, fixée sur les éléments de caisse 12.

Le bloc avant 10 comprend en outre des ailes latérales 16, une peau avant 18 de bouclier, et deux bras souples 20 de support d'un bloc optique 22 rapportés sur une région des éléments de caisse 12 située à l'avant et à l'écart de la face avant 14, par l'intermédiaire d'une patte de fixation 23.

De manière classique, les éléments de caisse 12 comprennent des longerons 24 inférieurs, des montants 26 supérieurs longitudinaux de support des ailes 16, une poutre 28 transversale de pare-chocs et des absorbeurs 30 de chocs montés longitudinalement entre les longerons 24 et la poutre 28.

Chaque longeron 24 présente à son extrémité avant située au contact des absorbeurs 30, une platine terminale 32 de fixation.

La face avant 14 est fixée transversalement sur les longerons 24, à l'avant du moteur et à l'arrière des platines terminales 32 des longerons. Elle comprend une traverse supérieure 34 et un cadre inférieur 36 de support d'un ventilateur.

La traverse supérieure 34 présente une région centrale 38, située en regard du cadre 36, et deux prolongements latéraux 40 sur lesquels sont rapportés les montants longitudinaux 26.

Le cadre 36 est solidaire de la traverse 34 et est situé sous la traverse 36. Il présente deux montants latéraux verticaux 42 s'étendant entre la traverse 34 et un longeron 24.

Dans cet exemple, la face avant 14 porte divers équipements du véhicule comme un ventilateur 44, un radiateur et/ou un échangeur de chaleur (non représenté).

Chaque bras souple 20 comprend un corps 50 flexible autour d'un axe sensiblement vertical, le corps 50 présentant une extrémité intérieure 52 rapportée sur les éléments de caisse 12 à l'avant de la face avant 14, et une extrémité extérieure 54 sur laquelle est fixé un bord avant de l'aile 16.

L'extrémité intérieure 52 du corps flexible comprend une plaque terminale 56 de fixation sur les éléments de caisse 12 s'étendant dans un plan vertical transversal.

Le corps flexible 50 comprend une partie intérieure 58 de liaison à la plaque terminale 56, et une partie extérieure 60 galbée de support du bloc optique 22. Les parties 58, 60 définissent entre elles une encoche verticale 62 d'affaiblissement débouchant vers l'arrière et définissant un axe de pivotement de la partie extérieure 60 par rapport à la partie intérieure 58.

La partie intérieure 58 s'étend longitudinalement à l'avant de la plaque terminale 56.

La partie extérieure 60 est galbée vers l'arrière et vers l'extérieur du véhicule. L'extrémité extérieure 54 est ainsi située à l'arrière de l'extrémité intérieure 52.

La partie extérieure 60 présente une surface supérieure 64 d'appui du bloc optique 22 et une surface avant 66 de support de la peau 18.

La surface supérieure 64 est sensiblement plane et horizontale. Des pions d'indexation 68 font saillie verticalement par rapport à la surface 64 pour assurer la fixation rigide du bloc optique 22 sur cette surface 64.

La surface avant 68 est sensiblement perpendiculaire à la surface supérieure 64. Des gouttières horizontales 70 de positionnement de la peau 18 font saillie à l'avant de la surface avant 68.

Le bloc optique 22 est par exemple un bloc optique monobloc intégrant une fonction clignotant et une partie principale d'éclairage. Le bloc optique 22 repose en appui sur la surface 64 et est maintenu en position sur cette surface par les pions d'indexation 68.

Dans cet exemple, chaque patte de fixation 23 est rapportée sur la poutre de pare-chocs 28, en regard d'une platine avant 32. Chaque patte 23 comprend ainsi un pied 72 fixé sur une surface supérieure de la poutre 28 et une saillie 74 de fixation du bras 20. La saillie de fixation 74 s'étend dans un plan vertical transversal. La plaque terminale 56 située à l'extrémité intérieure 52 du bras est fixée à l'avant de la saillie 74, par exemple par vissage ou rivetage.

L'aile 16 est formée par un panneau de carrosserie fixé à l'arrière sur les éléments de caisse 12, et fixée le long de son bord avant à l'extrémité extérieure 54 du bras 20.

La peau 18 comprend une région centrale 80 sensiblement transversale couvrant la poutre 28 à l'avant, et deux joues latérales 82 couvrant les bras 20 et les extrémités gauche et droite de la poutre 28.

Le bord supérieur des joues 80 est engagé dans les gouttières 70 pour positionner la peau 18 par rapport au bloc optique 22.

Un procédé de montage de la première face avant 10 selon l'invention va maintenant être décrit.

Initialement, la face avant 14 munie de ses équipements 44 est montée sur les longerons 24 du véhicule par l'intermédiaire des montants 42. Puis, les absorbeurs 30 sont rapportés sur les platines terminales 32 et la poutre de pare-chocs 28 est montée à l'avant des absorbeurs 30.

Ensuite, les pattes de fixation 23 sont rapportées sur une surface supérieure de la poutre 28. Les plaques terminales 58 situées à l'extrémité intérieure 52 des bras 20 sont alors appliquées à l'avant des saillies de fixation 74 puis sont fixées sur ces saillies 74 par vissage ou par rivetage.

Les blocs optiques 22 sont ensuite placés sur les surfaces d'appui 64 des bras 80 et sont maintenus en position sur les surfaces 64.

Puis, les éléments de carrosserie comme les ailes 16 et la peau 18 de pare-chocs sont fixés sur la caisse. Le bord avant de chaque aile 16 est fixé à l'extrémité extérieure 54 d'un bras 20 et le bord supérieur des joues 82 est introduit dans les gouttières 70 pour être fixé sur ces gouttières.

Chaque bras 20 étant souple, il est apte à se déformer autour de l'encoche 62, ce qui ajuste automatiquement les jeux entre les éléments de carrosserie 16, 18 et les blocs optiques 22. L'aspect esthétique extérieur du véhicule est donc très satisfaisant.

En outre, le bras 20 étant fixé à l'avant de la face avant 14, il est possible de prévoir des ailes 16 qui s'étendent notablement à l'avant et sur le côté de la face avant 14. Des gabarits volumineux de véhicules peuvent donc être obtenus.

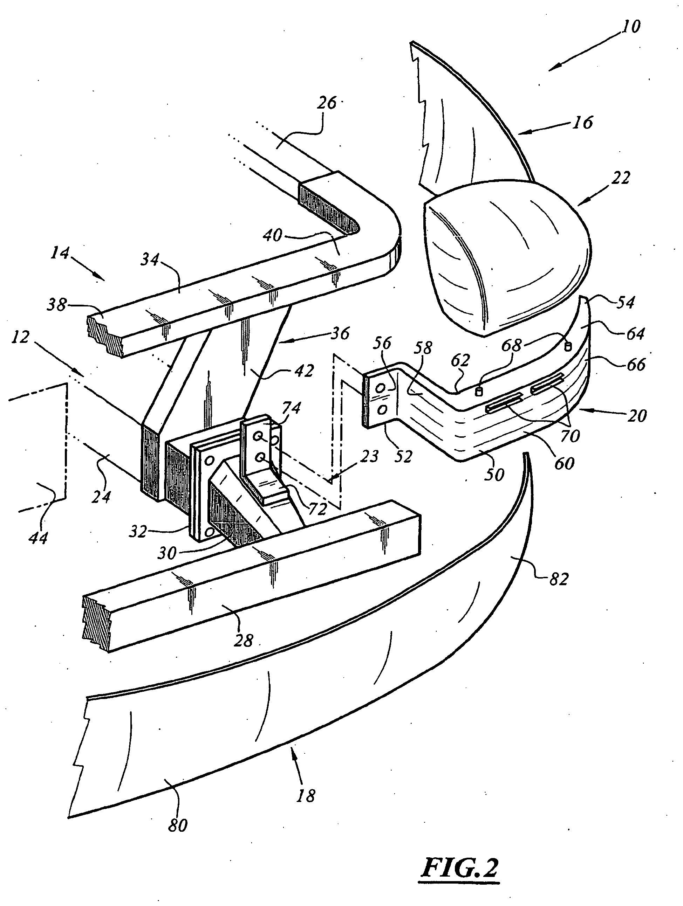

Dans la variante représentée sur la Figure 2, le pied 72 des pattes de fixation 23 est fixé sur les absorbeurs de chocs 30 situés entre les platines terminales 32 des longerons 24 et la poutre de pare-chocs 28.

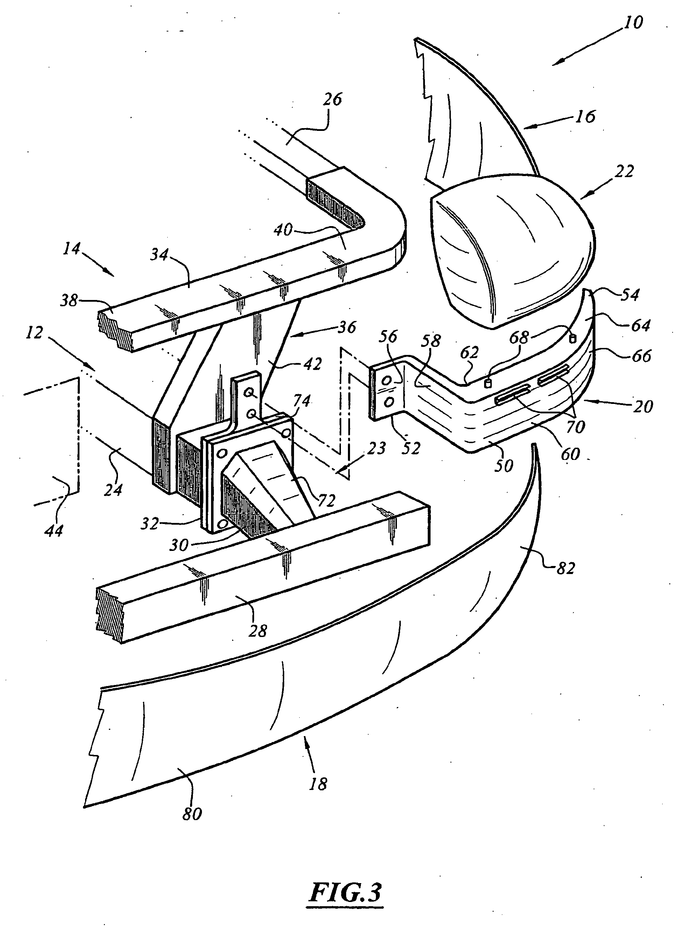

Dans la variante représentée sur la Figure 3, chaque patte de fixation 23 est solidaire de la platine terminale 32. Dans cet exemple, la patte 23 comprend une saillie de fixation 74 venue de matière avec la platine terminale 32. La patte 23 est dépourvue de pied 72.

Dans une autre variante (non représentée), le bloc avant est dépourvu de face avant structurelle 14. Il comprend une traverse 34 portant le ventilateur 44, sans cadre structurel 36.

## Revendications

1. Bloc avant (10) de véhicule automobile, du type comprenant :
- des éléments rigides (12) de caisse comportant au moins deux longerons (24) et une poutre (28) de pare-chocs fixée sur les longerons (24), chaque longeron (24) comprenant une platine avant (32) située à son extrémité avant ;
- un organe transversal (14) de structure portant au moins un ventilateur et un échangeur de chaleur, l'organe transversal étant fixé transversalement sur les éléments de caisse (12) à l'arrière de chaque platine avant (32) ; l'organe transversal de structure (14) étant destiné à être fixé à l'avant du moteur ;
- une peau (18) de pare-chocs ;
- au moins un panneau de carrosserie (16) ; et
- deux bras souples (20) de support de bloc optique, chaque bras souple (20) portant un bloc optique (22) et étant fixé à la peau de pare-chocs (18) et/ou au panneau de carrosserie (16) ; chaque bras souple étant apte à ajuster automatiquement les jeux entre le bloc optique, et la peau de pare-chocs ou chaque panneau de carrosserie ;
**caractérisé en ce que** chaque bras souple (20) est rapporté sur une région avant (28 ; 30) des éléments de caisse (12) située à l'avant des platines avant (32) de longerons, à l'écart de l'organe transversal de structure (14), la région avant étant choisie parmi une poutre (28) de pare-chocs et un absorbeur de chocs (30) interposé entre une poutre de pare-chocs (28) et une platine avant (32) de longeron (24).

2. Bloc avant (10) selon la revendication 1, **caractérisé en ce qu'**il comprend, pour chaque bras souple (20), une patte de fixation (23) du bras (20) présentant une surface (72) de fixation à un élément de caisse (12) et une surface (74) de fixation au bras (20) qui fait saillie par rapport à la surface de fixation (72) à l'élément de caisse (12).

3. Bloc avant (10) selon l'une quelconque des revendications précédentes, **caractérisé en ce que** le ou chaque bras (20) comprend un corps intermédiaire (50) souple s'étendant entre une extrémité intérieure (52) fixée sur les éléments de caisse (12) et une extrémité extérieure (54) fixée sur la peau de pare-chocs (18) et/ou le panneau de carrosserie (16).

4. Bloc avant (10) selon l'une quelconque des revendications précédentes, **caractérisé en ce que** l'organe transversal de structure (14) est une face avant transversale comprenant une traverse transversale (34) et un cadre (36) solidaire de la traverse (34), et s'étendant sous la traverse (34).

5. Véhicule automobile, **caractérisé en ce qu'**il comprend un bloc avant (10) selon l'une quelconque des revendications précédentes.

## Patentansprüche

1. Vorderstruktur (10) eines Kraftfahrzeugs der Bauart, die umfasst:
- starre Karosserieelemente (12), die mindestens zwei Längsträger (24) und einen an den Längsträgern (24) befestigten Stroßfängerträger (28) aufweisen, wobei jeder Längsträger (24) eine vordere Platte (32) umfasst, die sich an seinem vorderen Ende befindet,
- ein transversales Strukturorgan (14), das mindestens einen Ventilator und einen Wärmetauscher trägt, wobei das transversale Organ transversal auf den Karosserieelementen (12) hinter jeder vorderen Platte (32) befestigt ist, wobei das transversale Strukturorgan (14) bestimmt ist, vor dem Motor befestigt zu sein,
- eine Stoßfängerverkleidung (18),
- mindestens eine Karosserieplatte (16) und
- zwei flexible Trägerarme (20) eines Optikblocks, wobei jeder flexible Arm (20) einen Optikblock (22) trägt und an der Stoßfängerverkleidung (18) und/oder an der Karosserieplatte (16) befestigt ist, wobei jeder flexible Arm imstande ist, die Spiele zwischen dem Optikblock und der Stoßfängerverkleidung oder jeder Karosserieplatte automatisch einzustellen,
**dadurch gekennzeichnet, dass** jeder flexible Arm (20) in einem vorderen Bereich (28; 30) der Karosserieelemente (12) angebracht ist, die sich vor den vorderen Platten (32) eines Längsträgers beabstandet vom transversalen Strukturorgan (14) befindet, wobei der vorderen Bereich aus einem Stoßfängerträger (28) und einem Stoßabsorber (30) ausgewählt ist, der zwischen einem Stoßfängerträger (28) und einer vorderen Platte (32) eines Längsträgers (24) angeordnet ist.

2. Vorderstruktur (10) nach Anspruch 1, **dadurch gekennzeichnet, dass** sie für jeden flexiblen Arm (20) eine Befestigungslasche (23) des Arms (20) umfasst, die eine Befestigungsfläche (72) an einem Karosserieelement (12) und eine Befestigungsfläche (74) am Arm (20) aufweist, die im Verhältnis zur Befestigungsfläche (72) am Karosserieelement (12) hervorsteht.

3. Vorderstruktur (10) nach einem der vorangehenden Ansprüche, **dadurch gekennzeichnet, dass** der oder jeder Arm (20) einen flexiblen Verbindungskörper (50) umfasst, der sich zwischen einem inneren, auf den Karosserieelementen (12) befestigten Ende (52) und einem äußeren, auf der Stoßfängerverkleidung (18) und/oder der Karosserieplatte (16) befestigten Ende (54) erstreckt.

4. Vorderstruktur (10) nach einem der vorangehenden Ansprüche, **dadurch gekennzeichnet, dass** das transversale Strukturorgan (14) eine transversale Vorderfläche ist, die einen transversalen Querträger (34) und einen mit dem Querträger (34) verbundenen Rahmen (36) umfasst, und sich unter dem Querträger (34) erstreckt.

5. Kraftfahrzeug, **dadurch gekennzeichnet, dass** es eine Vorderstruktur (10) nach einem der vorangehenden Ansprüche umfasst.

## Claims

1. A motor vehicle front end (10), of the type comprising:
- rigid body shell elements (12) including at least two girders (24) and a bumper beam (28) fixed on the girders (24), each girder (24) comprising a front plate (32) situated at its front end;
- a transverse structural member (14) bearing at least a fan and a heat exchanger, the transverse member being fixed transversely on the body shell elements (12) behind each front plate (32); the transverse structural member (14) being designed to be fixed to the front of the engine;
- a bumper skin (18);
- at least one body panel (16); and
- two flexible arms (20) for supporting a vehicle lamp (22), each flexible arm (20) bearing a vehicle lamp (22) and being fastened to the bumper skin (18) and/or to the body panel (16); each flexible arm being able to adjust the clearance automatically between the vehicle lamp and the bumper skin or each body panel;
**characterized in that** each flexible arm (20) is connected on a front region (28; 30) of the body shell elements (12) situated in front of the front girder platens (32), away from the transverse structural member (14), the region having been chosen from among a bumper beam (28) and a shock absorber (30) inserted between a bumper beam (28) and a front platen (32) of a girder (24).

2. The front end (10) according to claim 1, **characterized in that** it comprises, for each flexible arm (20), a fastening tab (23) of the arm (20) having a surface (72) for fastening to a body shell element (12) and a surface (74) for fastening to the arm (20) that protrudes relative to the fastening surface (72) to the body shell element (12).

3. The front end (10) according to any one of the preceding claims, **characterized in that** the or each arm (20) comprises a flexible intermediate body (50) extending between an inner end (52) fixed on the body shell elements (12) and an outer end (54) fixed on the bumper skin (18) and/or the body panel (16).

4. The front end (10) according to any one of the preceding claims, **characterized in that** the transverse structural member (14) is a transverse front face comprising a transverse cross-member (34) and a frame (36) fixed to the cross-member (34), and extending below the cross-member (34).

5. A motor vehicle, **characterized in that** it comprises a front end (10) according to any one of the preceding claims.
